(19) Europäisches Patentamt
European Patent Office
Office européen des brevets

(11) Publication number: **0 439 294 A1**

# (12) EUROPEAN PATENT APPLICATION

(21) Application number: **91300401.6**

(51) Int. Cl.[5]: **C09D 4/00**

(22) Date of filing: **18.01.91**

(30) Priority: **24.01.90 US 469107**

(43) Date of publication of application:
**31.07.91 Bulletin 91/31**

(84) Designated Contracting States:
**DE FR GB IT**

(71) Applicant: **DOW CORNING CORPORATION**
**3901 S. Saginaw Road**
**Midland Michigan 48686-0994(US)**

(72) Inventor: **Cottington, Levi James**
**21 Erie Court**
**Midland, Michigan(US)**
Inventor: **Revis, Anthony**
**9417 Garfield Road**
**Freeland, Michigan(US)**

(74) Representative: **Laredo, Jack Joseph et al**
**Elkington and Fife Beacon House 113**
**Kingsway**
**London, WC2B 6PP(GB)**

## (54) Alkoxy-functional silane compositions for unprimed adhesion to polycarbonate.

(57) The present invention relates to a novel coating composition containing alkoxy-functional silanes and colloidal silica to which hydroxyacrylates have been added. This coating composition may be applied to solid substrates and thermal cured to form a substantially clear, abrasion resistant layer. The composition has particular utility as an abrasion resistant coating for plastics, especially polycarbonate, without the need for primers.

EP 0 439 294 A1

## ALKOXY-FUNCTIONAL SILANE COMPOSITIONS FOR UNPRIMED ADHESION TO POLYCARBONATE

This invention relates to a one part thermal cure protective coating composition. More specifically, it relates to a coating composition containing alkoxy-functional silanes, colloidal silica and hydroxyacrylates. When applied to a substrate, such as polycarbonate, and cured, this composition forms a protective, abrasion resistant, weather resistant, ultraviolet light resistant, transparent coating firmly held thereon.

The present invention offers many advantages over known silicone coating compositions which contain alkoxy-functional silanes and colloidal silica in that unprimed adhesion to polycarbonate is attained. This is accomplished by incorporating hydroxyacrylates into such compositions.

Alkoxy-functional silanes have been readily employed in abrasion resistant coating formulations. For example, U.S. Patent No. 3,986,997, issued October 19, 1976, and assigned to Dow Corning Corporation, Midland, MI., and U.S. Patent Nos. 4,309,319 issued January 5, 1982 and 4,436,851 issued March 13, 1984, and assigned to General Electric Company, Waterford, N.Y., describe thermally cured abrasion resistant coatings formed from mixtures of alkoxy-functional silanes and colloidal silica. Although the cured coating films of these compositions show good adhesiveness to acrylic type resin substrates, such coatings either fail completely to adhere to certain plastic substrates or adhere initially but peel after brief weathering. This is especially evident for polycarbonate which tends to have irregular surface characteristics as it is formed into solid articles. Consequently, a two step system is normally recommended for coating plastics such as polycarbonate, in which, for example, an acrylic primer is first applied which adheres to both the silicone resin coating and the polycarbonate substrate. The coating composition is then put on over the primer coat.

To avoid the need for a primer coat, U.S. Patent No. 4,413,088, issued November 1, 1983, and assigned to General Electric Co., Waterford, N.Y., suggests replacing the usual alcohol solvents, e.g. isopropanol with more aggressive solvents such as ketones, esters, nitroparrafins or the like. These solvents, however, are expensive and have deleterious effects on substrates such as polycarbonate. Primers may also be avoided, according to U.S. Patent No. 4,783,347 issued November 8, 1988 and assigned to General Electric Company, Waterford, N.Y., if the coating composition is shock cured (i.e., cured at a temperature not substantially below 140° C.). However, many plastics commonly used as substrates cannot tolerate such high temperatures, even for a short period of time.

It is therefore an object of the present invention to produce a transparent abrasion resistant thermal cure coating composition which adheres to plastics such as polycarbonate, without high temperature shock cure or the necessary addition of primers or expensive solvents.

The object described above is accomplished by a coating composition containing a dispersion of colloidal silica in an aliphatic alcohol-water solution of the partial condensate of a organic silanol, the improvement comprising incorporating therein a hydroxyacrylate selected from the group consisting of

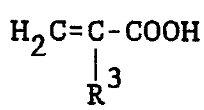

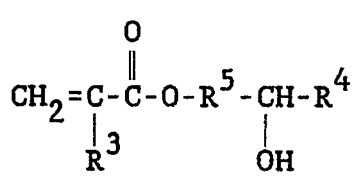

and mixtures thereof, wherein:

$R^3$ is hydrogen or a monovalent hydrocarbon radical having 1 to 6 carbon atoms,

$R^4$ is selected from the group consisting of hydrogen, a monovalent hydrocarbon radical having from 1 to 6 carbon atoms, and a monovalent hydrocarbon radical having from 1 to 6 carbon atoms and containing at least one hydroxy group, and

$R^5$ is a divalent hydrocarbon radical having 1 to 10 carbon atoms, optionally containing one or more ether oxygen atoms within aliphatic segments thereof.

The preparation, further description and structural formulae for coating compositions containing a dispersion of colloidal silica in an aliphatic alcohol-water solution of the partial condensate of a silanol are described, for example, in U.S. Patent Nos. 3,986,997 and 4,413,088, cited supra. Furthermore, the types

and percentages of the silanes and colloidal silica used in these compositions can be modified as described herein.

Silicon compounds useful in the practice of the present invention are selected from the group consisting of an alkoxy-functional silane of the formula $R^1_aSi(OR^2)_{4-a}$, hydrolysis products of such a silane, and mixtures thereof. $R^1$ and $R^2$ are independently selected from the group consisting of hydrogen and a monovalent hydrocarbon radical having 1 to 6 carbon atoms, including halogenated species of such radicals. Preferably, $R^1$ and $R^2$ will be lower alkyl radicals such as methyl, ethyl, propyl, etc., but may include other saturated and unsaturated species including vinyl, aryl, etc. The letter a is an integer from 0 to 2 such that there are 4-a alkoxy groups in the silane molecule.

A hydrolysis product of such alkoxy-functional silanes is obtained by contacting the alkoxy-functional silanes with water. Water necessary for hydrolysis is present in the aqueous dispersion of colloidal silica. No additional water need be added. If less than a stoichiometric amount of water is utilized, a partial hydrolysis is obtained. Such partial hydrolyzates can also be used to obtain the coatings of the present invention. Among the particularly useful alkoxy-functional silanes are the following:

tetraethoxysilane
ethyltriethoxysilane
diethyldiethoxysilane
tetramethoxysilane
methyltrimethoxysilane
dimethyldimethoxysilane

These alkoxy-functional silanes are commercially available from Petrarch Systems, Inc., Bristol, PA.

The colloidal silica component of this invention may include dispersions of both organic and aqueous based colloidal silica. Organic based colloidal silica may be used as long as it is used in conjunction with aqueous based colloidal silica. Colloidal silica is available in acid or basic form. Either form may be utilized. Some preferred examples of colloidal silica include: Nalco 1034A colloidal silica (Nalco 1034A), Nalco 1129 colloidal silica (Nalco 1129), Nalco 2327 colloidal silica (Nalco 2327), Nalco 2326 colloidal silica (Nalco 2326), Nalco 1140 colloidal silica (Nalco 1140), and Nalco 84SS258 colloidal silica (Nalco 84SS258), which can be obtained from Nalco Chemical Company, Naperville, IL.

Nalco 1034A has a mean particle size of 20 nm and an $SiO_2$ content of approximately 34% by weight in water with a pH of approximately 3.1. Nalco 1129 has a mean particle size of 20nm and an $SiO_2$ content of approximately 30% by weight in a solution of 40% isopropanol and 30% water. Nalco 2327 has a mean particle size of 20nm and an $SiO_2$ content of approximately 40% by weight in water with a pH of approximately 9.3, and ammonium as the stabilizing ion. Nalco 2326 has a mean particle size of 5nm and an $SiO_2$ content of approximately 14.5% by weight in water with a pH of approximately 9.0, and ammonium as the stabilizing ion. Nalco 1140 has a mean particle size of 15nm and an $SiO_2$ content of approximately 40% by weight in water with a pH of approximately 9.7, and sodium as the stabilizing ion. Nalco 84SS258 has a mean particle size of 20nm and an $SiO_2$ content of approximately 30% by weight in a solution of propoxyethanol.

The hydroxyacrylate is selected from the group consisting of

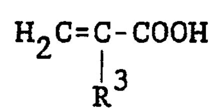

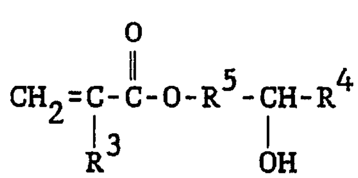

and mixtures thereof wherein: $R^3$ is hydrogen or a monovalent hydrocarbon radical having 1 to 6 carbon atoms. $R^4$ is selected from the group consisting of hydrogen, a monovalent hydrocarbon radical having from 1 to 6 carbon atoms, and a monovalent hydrocarbon radical having from 1 to 6 carbon atoms and containing at least one hydroxy group. $R^5$ is a divalent hydrocarbon radical having 1 to 10 carbon atoms; optionally containing one or more ether oxygen atoms within aliphatic segments thereof. $R^5$ may include alkylene, alkenylene, arylene, alkarylene and aralkylene groups. The exact nature of the organic portion of

$R^5$ is not critical to the operability of this invention, the organic portion serves only as a structure to link the acryloxy functionality thereof with the hydroxy functionality thereof, and is preferably chemically inert.

Among the hydroxyacrylates which may be utilized in the present invention are:

acrylic acid
2-hydroxyethylacrylate
2-hydroxyethylmethacrylate
2-hydroxypropylacrylate
2-hydroxypropylmethacrylate
3-hydroxypropylacrylate
3-hydroxypropylcrotonate
3-hydroxypropylmethacrylate
5-hydroxypentylacrylate
2-hydroxy-3-methacryloxypropylacrylate
2-hydroxy-3-acryloxypropylacrylate
2-hydroxy-3-methacryloxypropylmethacrylate
2-hydroxyethyl 2-octenoate
2-hydroxyethyl 2-pentylacrylate

These hydroxy acrylates are commercially available from Aldrich Chemical Company, Inc., Milwaukee, WI.

The solids content of the coating composition is generally preferred to be in the range from about 10 to 60 weight percent, most preferably about 30 to 40 weight percent of the total composition.

In the practice of the present invention, the coating compositions are easily prepared by combining alkoxy-functional silanes and colloidal silica, with a given quantity of alcohol. Suitable alcohols, for example, include any water soluble or water miscible alcohol, for example, methanol, ethanol, propanol, butanol, etc., or ether alcohols, such as ethoxyethanol, butoxyethanol, methoxypropanol, etc. For purposes of the present invention, applicants prefer to use isopropanol. Generally, the manner in which these components are mixed together is not important. A small amount of a carboxylic acid may, optionally, be added dropwise to the mixture. Suitable carboxylic acids include, for example, acetic acid, propionic acid and benzoic acid, etc.

If a catalyst is to be used, it is added at this time along with the hydroxyacrylates. This mixture is then allowed to stand for a period of time. While not wishing to be bound by any particular mechanism or theory, applicants believe that the hydroxy portion of the hydroxyacrylates react with the methoxy portion of the alkoxy-functional silanes. Depending on the type of hydroxyacrylates used, applicants believe this reaction to be instantaneous at room temperature. However, applicants prefer to allow the mixture to stand at 25° C. for 1 to 20 hours before filtering.

The coating compositions of this invention will cure on a substrate at temperatures of, for example, 165° C. without the aid of a curing catalyst. However, in order to employ more desirable milder curing conditions, condensation catalysts can be added. Included in this class of catalysts are alkali metal salts of carboxylic acids, such as sodium acetate, potassium formate and the like. Amine carboxylates, such as dimethylamine acetate, ethanolamine acetate, dimethylaniline formate and the like, quaternary ammonium carboxylates such as tetramethylammonium acetate, trimethylbenzylammonium acetate, metal carboxylates, like tin octoate and amines such as triethylamine, triethanolamine, pyridine and the like are also contemplated curing catalysts herein. Alkali hydroxides, like sodium hydroxide and ammonium hydroxide can also be used as curing catalysts herein.

Where a catalyst is employed, amounts of from about 0.05 to about 0.5 weight percent, preferably about 0.1 weight percent, of the total composition can be used. Compositions containing catalysts in these amounts can be cured on a solid substrate in a relatively short time at temperatures in the range of from about 75° C.-150° C. Cure rate is a function of time and temperature. In addition, the cure conditions are governed by the temperature a substrate can tolerate. A cure time of four hours at 185° F (85° C.) is recommended for acrylics and two hours at 257° F (125° C.) for polycarbonates. Over curing is not typically a problem.

Other additives can be added to the compositions in order to enhance the usefulness of the coatings. For example, leveling agents, ultraviolet light absorbers, hindered amine light stabilizers (HALS), dyes and the like, can be included herein. All of these additives and the use thereof are well known in the art and do not require extensive discussions. Therefore, only a limited number will be referred to, it being understood that any of these compounds can be used as long as they do not deleteriously effect either the thermal curing or the transparency of the coating.

A particularly desirable additive has been found to be a small amount of a leveling agent. Leveling agents can be used on the substrates to cover surface irregularities and to aid in the uniform dispersion of the coating composition. For purposes of the present invention, the addition of 0.01 to 5.0 percent

commercial silicone glycol leveling agents, work well to provide the coating composition with desirable flowout and wetting properties.

Also useful as additives to the present coating compositions are UV absorbers and hindered amine light stabilizers. UV absorbers and hindered amine light stabilizers act to diminish the harmful effects of UV radiation on the final cured product and thereby enhance the weatherability, or resistance to cracking, yellowing and delamination of the coating. A preferred hindered amine light stabilizer is bis(1,2,2,6,6-pentamethyl-4-piperidinyl)[3,5-bis(1,1-dimethylethyl-4-hydroxyphenyl)methyl]butylpropanedioate, available as Tinuvin (R) 144, from CIBA-GEIGY Corporation, Hawthorne, NY.

For the purpose of the present compositions the following UV absorbers and combinations thereof in concentrations of less than 20 weight percent based on the total composition, have been shown to produce desirable results: bis(1,2,2,6,6-pentamethyl-4-piperidinyl)(3,5-bis(1,1-dimethylethyl 1-4-hydroxyphenyl)-methyl)butylpropanedioate, 2-ethylhexyl-2-cyano-3,3'-diphenylacrylate, 2-hydroxyl-4-n-octoxybenzophenone, 2-(2'-hydroxy-5'-methylphenyl)benzotriazole, poly(oxy-1,2-ethanediyl),alpha-(3-(3-(2H-benzotriazol-2-yl)-5-(1,1-dimethylethyl)-4-hydroxylphenyl)-1-oxopropyl)-omega-hydroxy, and Uvinul (R) D-50 and MS-40, sold by BASF Wyandotte Inc., Parsippany, NJ. Concentrations of UV absorbers, however, in the range of 1 to 5 percent based on the total weight of the composition are preferred.

According to the coating process of the present invention, the above described compositions are coated on a substrate using conventional coating techniques modified as appropriate to the particular substrate. For example, these compositions can be applied to a variety of solid substrates by methods such as roller coating, flow coating, dip coating, spin coating, spray coating and curtain coating. These various methods of coating allow the compositions to be placed on the substrate at variable thicknesses thus allowing a wider range of use of the compositions. Coating thicknesses may vary, but for improved abrasion resistance coating thicknesses of 2-25 microns, preferably about 5 microns, are recommended.

By choice of the proper formulation and application conditions including the optional use of a leveling agent, the compositions can be applied and will adhere to substantially all solid substrates. Substrates which are especially contemplated herein are transparent and nontransparent plastics and metals. More particularly, these plastics are synthetic organic polymeric substrates such as acrylic polymers like poly-(methylmethacrylate); polyesters, such as poly(ethylene terephthalate), poly (butylene terephthalate), etc.; polyamides; polyimides; acrylonitrile-styrene copolymers; styrene-acrylonitrile-butadiene copolymers; polyvinyl chloride; butyrates; polyethylene; polyolefins and the like including modifications thereof. The compositions of this invention are especially useful as transparent coatings for polycarbonates such as poly-(bisphenol-A carbonate) and those polycarbonates known as Lexan (R), sold by General Electric Company, Schenectady, New York; and as coatings for acrylics such as polymethylmethacrylates. Metal substrates on which the present compositions are also effective include bright and dull metals like aluminum and bright metallized surfaces like sputtered chromium alloy. Other solid substrates contemplated herein include wood, painted surfaces, leather, glass, ceramics and textiles.

The apparatus and testing procedures used for the results shown herein are as follows:

Adhesion was measured by modified ASTM-D-3002 (cross-hatch adhesion). The coated test specimen is scribed with a razor, cutting through the coating to form a series of cross-hatch scribes in an area of one square inch with lines to form 1/10 inch squares. Clear cellophane tape (3M No. 600 preferred), is applied to the scribed surface, pressed down, then stripped sharply away in a direction perpendicular to the test panel surface. This first tape pull is followed by two more, using fresh tape each time. After three tape pulls, the number of squares remaining intact on the specimen are reported as a percentage of the total number of squares on the grid.

The pencil test is meant to be a qualitative method of determining scratch resistance of a coating. A coated panel is placed on a firm horizontal surface. A pencil is held firmly against the film at a 45° angle (point away from the operator) and pushed away from the operator in a 1/4-in. (6.5-mm) stroke. The process is started with the hardest lead pencil and continued down the scale of hardness to the pencil that will not cut into or gouge the film. The hardest pencil that will not cut through the film to the substrate for a distance of at least 1/8 in. (3mm) is reported according to the following scale from Berol Corporation, Brentwood, TN.:

-----------softer-----　　-------------harder-------------

6B, 5B, 4B, 3B, 2B, B, HB, F, H, 2H, 3H, 4H, 5H, 6H,7H,8H,9H

The HB grade is approximately equal to that of a #2 pencil. The F grade is slightly harder and is the one

most commonly used. The H grades are harder than that and get progressively harder up through the 9H grade which is very hard. The B grade is softer than the HB grade and get progressively softer through the 6B grade which is very soft.

In the Steel Wool Test, a two inch square of 0000 steel wool was applied over the face of a 24 oz. hammer and was secured with a rubber band. Coated sample blanks were tested for scratch resistance to 20 double rubs across the center of the sample with the weighted steel wool. The hammer is held by the end of its handle such that the majority of the pressure on the steel wool comes from the hammer head. The sample is graded according to the amount of scratching produced by the steel wool and hammer. The absence of scratches on the sample is graded a 1; slight scratching is graded a 2 and heavy scratching is graded a 3.

In the Water Immersion Test, this property was determined by placing a given sample in boiling water for one hour. During the boiling period, the sample was entirely covered with water and no contact with the heated bottom of the container was allowed. After the boiling period, the sample was removed from the water and allowed to cool to room temperature before being tested. The action of placing the sample in boiling water for one hour before withdrawing was repeated three times. Adhesion testing was performed on the sample after the third hour.

In order that those skilled in the art may better understand how to practice the present invention, the following examples are given by way of illustration and not by way of limitation. All parts and percentages in the examples are on a weight basis.

## EXAMPLE 1

A mixture of 138.0 g of methyltrimethoxysilane, 0.2 g of acetic acid, 200.0 g of Nalco 1034A, 189.4 g of isopropanol and 1.5 g of trimethylbenzylammonium acetate was prepared. To 19.60 g of this mixture was added 0.41 g of 2-hydroxyethylmethacrylate. The resulting mixture was allowed to stand at room temperature (25° C.) for 18 hours. This mixture was then filtered through a five micron filter, flow coated onto a 4 x 4 polycarbonate panel and then allowed to air dry for thirty minutes. The panel was placed into a 125° C. oven for two hours. The test results are summarized in Table I.

## EXAMPLE 2

A mixture of 138.0 g of methyltrimethoxysilane, 0.2 g of acetic acid, 200.0 g of Nalco 1034A and 189.4 g of isopropanol, was prepared. To 19.60 g of this mixture was added 1.5 g of trimethylbenzylammonium acetate and 0.40 g of 2-hydroxyethylmethacrylate. The resulting mixture was allowed to stand at room temperature (25° C.) for 18 hours. This mixture was then filtered through a five micron filter, flow coated onto a 4 x 4 polycarbonate panel and allowed to air dry for thirty minutes. The panel was placed into a 125° C. oven for two hours. The test results are summarized in Table I.

## EXAMPLE 3

A mixture of 138.0 g of methyltrimethoxysilane, 0.2 g of acetic acid, 200.0 g of Nalco 1034A and 189.4 g of isopropanol, was prepared. To 19.25 g of this mixture was added 1.5 g of trimethylbenzylammonium acetate, 0.51 g of 2-hydroxyethylmethacrylate, 0.21 g of Uvinul (R) N-539, sold by BASF Wyandotte Inc., Parsippany, NJ., and 0.05 g of Tinuvin 144 (R), from Ciba-Geigy Corporation, Hawthorne, NY. The resulting mixture was allowed to stand at room temperature (25° C) for 18 hours. This mixture was then filtered through a five micron filter, flow coated onto a 4 x 4 polycarbonate panel and allowed to air dry for thirty minutes. The panel was placed into a 125° C. oven for two hours. The test results are summarized in Table I.

## EXAMPLE 4

A mixture of 138.0 g of methyltrimethoxysilane, 0.2 g of acetic acid, 200.0 g of Nalco 1034A and 189.4 g of isopropanol, was prepared. To 19.25 g of this mixture was added 1.5 g of trimethylbenzylammonium acetate, 0.51 g of 2-hydroxyethylmethacrylate, 0.21 g of Uvinul (R) N-539, sold by BASF Wyandotte Inc., Parsippany, NJ., and 0.05 g of Tinuvin 144 (R), from Ciba-Geigy Corporation, Hawthorne, NY. The resulting mixture was allowed to stand at room temperature (25° C.) for 18 hours. This mixture was then filtered through a five micron filter, flow coated onto a 4 x 4 polycarbonate panel and allowed to air dry for thirty minutes. The panel was placed into a 125° C. oven for two hours. The test results are summarized in Table

I.

EXAMPLE 5

A mixture of 138.0 g of methyltrimethoxysilane, 0.2 g of acetic acid, 200.0 g of Nalco 1034A and 189.4 g of isopropanol, was prepared. To 19.60 g of this mixture was added 1.5 g of trimethylbenzylammonium acetate and 0.41 g of acrylic acid. The resulting mixture was allowed to stand at room temperature (25° C.) for 18 hours. This mixture was then filtered through a five micron filter, flow coated onto a 4 x 4 polycarbonate panel and allowed to air dry for thirty minutes. The panel was placed into a 125° C. oven for two hours. The test results are summarized in Table I.

COMPARISON EXAMPLE A

A mixture of 138.0 g of methyltrimethoxysilane, 0.2 g of acetic acid, 200.0 g of Nalco 1034A and 189.4 g of isopropanol, was prepared. To 19.60 g of this mixture was added 1.5 g of trimethylbenzylammonium acetate. The resulting mixture was allowed to stand for 18 hours. This mixture was then filtered through a five micron filter, flow coated onto a 4 x 4 polycarbonate panel and allowed to air dry for thirty minutes. The panel was placed into a 125° C. oven for two hours. The test results are summarized in Table I.

TABLE I

Properties of Coated Polycarbonate

| Coating Compositions | ADHESION TEST | STEEL WOOL | PENCIL TEST | WATER IM TEST |
|---|---|---|---|---|
| Ex. 1 | 100% | 2 | HB-F | 100% |
| Ex. 2 | 100% | 2 | HB | 100% |
| Ex. 3 | 100% | 2 | HB | 100% |
| Ex. 4 | 100% | 2 | HB | 99% |
| Ex. 5 | 100% | 2 | B | 100% |
| Ex. A | 100% | 1 | F-H | 0% |

As the results in Table I clearly indicate, coating compositions containing alkoxy-functional silanes and colloidal silica, to which hydroxyacrylates have been added, readily adhere to and form superior transparent abrasion resistant coatings on polycarbonate following thermal cure without the need for primers.

Many variations will suggest themselves to those skilled in this art in light of the above detailed description. All such obvious modifications are within the full intended scope of the appended claims.

## Claims

1. In a coating composition containing a dispersion of colloidal silica in an aliphatic alcohol-water solution of the partial condensate of a silanol, the improvement comprising incorporating therein a hydroxyacrylate selected from the group consisting of

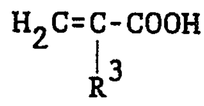

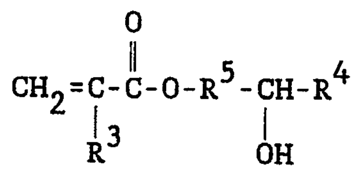

and mixtures thereof, wherein:

$R^3$ is hydrogen or a monovalent hydrocarbon radical having 1 to 6 carbon atoms,

$R^4$ is selected from the group consisting of hydrogen, a monovalent hydrocarbon radical having from 1 to 6 carbon atoms, and a monovalent hydrocarbon radical having from 1 to 6 carbon atoms and containing at least one hydroxy group, and

$R^5$ is a divalent hydrocarbon radical having 1 to 10 carbon atoms, optionally containing one or more ether oxygen atoms within aliphatic segments thereof.

**2.** A composition as claimed in claim 1 wherein there is also present in the dispersion of colloidal silica and organic solvent.

**3.** A composition as claimed in claim 1 which additionally contains a buffered latent silanol condensation catalyst.

**4.** The product obtained by the cure of the composition of claim 1.

**5.** A process for preparing a thermal cure coating composition comprising:

(I) forming a mixture of

(A) a silicon compound selected from the group consisting of an alkoxy-functional silane of the formula $R^1_aSi(OR^2)_{4-a}$, hydrolysis products of such a silane, and mixtures thereof wherein:

$R^1$ and $R^2$ are independently selected from the group consisting of hydrogen and monovalent hydrocarbon radicals having 1 to 6 carbon atoms, including halogenated species of such radicals,

a is an integer from 0 to 2; and

(B) a aqueous dispersion of colloidal silica; and thereafter

(II) mixing said component (I) with

(C) a hydroxyacrylate selected from the group consisting of

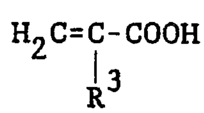

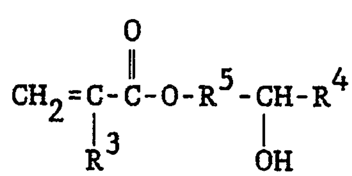

and mixtures thereof, wherein:

$R^3$ is hydrogen or a monovalent hydrocarbon radical having 1 to 6 carbon atoms,

$R^4$ is selected from the group consisting of hydrogen, a monovalent hydrocarbon radical having from 1 to 6 carbon atoms, and a monovalent hydrocarbon radical having from 1 to 6 carbon atoms and containing at least one hydroxy group, and

$R^5$ is a divalent hydrocarbon radical having 1 to 10 carbon atoms, optionally containing one or more ether oxygen atoms within aliphatic segments thereof.

6. A solid substrate having at least one surface coated with the cured composition of claim 1.

European Patent Office

# EUROPEAN SEARCH REPORT

Application Number

EP 91300401.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | US - A - 3 986 997 (HAROLD A. CLARK) * Abstract * -- | 1 | C 09 D 4/00 |
| D,A | US - A - 4 309 319 (HOWARD A. VAUGHN, JR.) * Abstract * -- | 1 | |
| D,A | US - A - 4 413 088 (ROBERT B. FRYE) * Abstract * -- | 1 | |
| D,A | US - A - 4 783 347 (JAMES E. DOIN et al.) * Abstract * ---- | 1 | |
| | | | TECHNICAL FIELDS SEARCHED (Int. Cl.5) |
| | | | C 09 D |

The present search report has been drawn up for all claims

| Place of search | Date of completion of the search | Examiner |
|---|---|---|
| VIENNA | 08-03-1991 | HEIN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)